# EUROPEAN PATENT SPECIFICATION

(11) **EP 4 385 681 B1**
(45) Date of publication and mention of the grant of the patent: **18.06.2025**
(21) Application number: 23214510.2
(22) Date of filing: 06.12.2023
(51) Int. Cl.: B25J 13/08, B25J 15/06

(54) **SUCTION PAD**
SAUGKISSEN
TAMPON D'ASPIRATION

(30) Priority: 12.12.2022 JP 2022197654
(43) Date of publication of application: 19.06.2024
(73) Proprietor: SMC Corporation, Tokyo 104-0031 (JP)
(72) Inventor: ITO, Toshinori, Ibaraki, 300-2493 (JP); YAMAMOTO, Shuhei, Ibaraki, 300-2493 (JP)
(74) Representative: Keil & Schaafhausen Patentanwälte PartGmbB

(56) References cited:
- JP-A- 2001 341 089
- JP-A- 2007 331 056
- JP-A- 2008 238 312
- JP-A- H09 183 089
- US-A1- 2017 073 174
- US-A1- 2019 248 025
- US-A1- 2020 103 463
- US-A1- 2021 053 192
- US-A1- 2021 053 216
- US-A1- 2021 331 331

## Description

### BACKGROUND OF THE INVENTION

### FIELD OF THE INVENTION

The present invention relates to a suction pad for sucking a workpiece using vacuum pressure, and more particularly to a suction pad capable of confirming the suction state of the workpiece.

### DESCRIPTION OF THE RELATED ART

Conventionally, there is known a suction pad that sucks a workpiece by bringing a sponge member made of a porous material into contact with the workpiece and generating vacuum pressure inside the sponge member. There is also known a technique for detecting the suction state of a workpiece by detecting pressure in a path through which vacuum pressure is introduced into a suction pad.

For example, JP 2022-017935 A discloses a suction pad including an inner sponge pad formed of an open cell sponge having air permeability, and an outer sponge pad formed of a closed cell sponge having no air permeability. A pressure sensor is disposed on a path through which the suction pad is connected to an ejector, and the suction state of the workpiece sucked by the inner sponge pad and the suction state of the workpiece sucked by the outer sponge pad are sequentially detected. As the art related to the present invention, US 2019/0248025 A1, US 2021/0053192 A1 and JP 2007-331056 A can be listed.

US 2019/0248025 A1 discloses a gripper assembly including a vacuum generation head, a plenum block, a check valve plate, and a gripper having foam structure. The check valve plate is formed of a number of chambers, and each of the chambers includes an opening facing the bottom, a ball blocking a vacuum supply conduit, an opening connected to the plenum block, and a pressure sensor. Each of the openings and each of the chambers individually correspond to a plurality of holes (ports) of the gripper. The vacuum supply conduit corresponding to the port in contact with the workpiece is not to be blocked by the ball and the corresponding pressure sensor indicates vacuum pressure. The vacuum supply conduit corresponding to the port out of contact with the workpiece is to be blocked by the ball and the pressure sensor indicates atmospheric pressure.

US 2021/0053192 A1 discloses a suction device having a body including a cavity and an open end of the cavity functioning as a suction face to suck a workpiece. A tangential nozzle is disposed on a sidewall surface of the cavity. A suction hole is disposed on the closed end face of the cavity. The suction hole is connected to a suction unit. US 2021/0053192 A1 discloses a suction device provided with a pressure detection unit to monitor the fluid pressure in the cavity.

JP 2007-331056 A discloses a vacuum suction device capable of estimating a suction area and a suction force. This vacuum suction device includes a vacuum suction pad, an air injection means, a depressurization means, a positive pressure measurement means, a negative pressure measurement means, a conduit for pressurization and a conduit for depressurization. The vacuum suction pad includes a vacuum chamber forming unit internally forming a vacuum chamber, a suction unit having a workpiece suction face and a check valve forming unit. The suction unit is formed of a sponge material or the like and provided with a plurality of suction paths in communication with an external space and the vacuum chamber. The check valve forming unit includes a plurality of check valves each arranged at each of the suction paths.

### SUMMARY OF THE INVENTION

In a vacuum suction device that includes a plurality of suction portions (suction pads) and is capable of sucking workpieces of various sizes, check valves (flow passage adjustment valves) may be disposed in respective paths that branch from a vacuum generator and reach the suction portions. By the action of the check valves, the vacuum pressure required for sucking the workpiece acts on the workpiece effectively. Also in a case where a large sponge pad including a large number of suction holes is used to suck workpieces of various sizes, it is desirable to dispose check valves as well.

However, in the vacuum suction device in which the check valves are disposed, the suction state of the workpiece cannot be easily confirmed by simply disposing the pressure sensor. This is because, since the vacuum pressure is maintained by the action of the check valves regardless of whether the workpiece is being sucked or is not being sucked, there is no difference between the pressures detected by the pressure sensor, and the state where the workpiece is being sucked and the state where the workpiece is not being sucked cannot be distinguished from each other.

The present invention has the object of solving the aforementioned problem.

This problem is solved by the suction pad according to claim 1. Preferred embodiments of the invention are evident from the dependent claims.

The suction pad according to the present invention has a structure in which the flow passage adjustment valves are disposed in the communication passages connecting the cavities of the sponge member to the negative pressure chamber, and includes the pressure detection port for detecting the pressure in at least one cavity of the sponge member. Therefore, it is possible to easily confirm whether or not the workpiece is being sucked.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a view schematically showing a cross section of a suction pad according to a first embodiment of the present invention;
FIG. 2 is a view showing a specific structural example of a flow passage adjustment valve of the suction pad of FIG. 1;
FIG. 3 is a view schematically showing a cross section of the suction pad of FIG. 1 when sucking a workpiece having a small size;
FIG. 4 is a view schematically showing a cross section of the suction pad of FIG. 1 when sucking a workpiece having a large size;
FIG. 5 is a view showing an arrangement example of pressure detection ports in the suction pad of FIG. 1; and
FIG. 6 is a view schematically showing a cross section of a suction pad according to a second embodiment of the present invention.

### DETAILED DESCRIPTION OF THE INVENTION

### (First Embodiment)

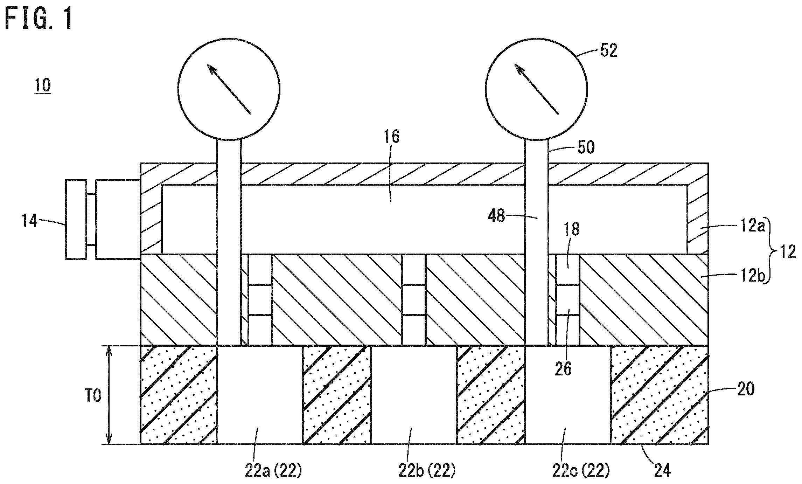

A suction pad 10 according to a first embodiment of the present invention will be described with reference to FIGS. 1 to 5. As shown in FIG. 1, the suction pad 10 includes a body 12 and a sponge member 20. In the following description, when terms in relation to upper and lower directions are used, such terms refer to the directions shown in the drawings, however, the actual arrangement of the respective constituent members is not limited thereby.

The body 12 is formed of a main body 12a that has a box shape and opens downward, and a plate 12b that is thick and covers the main body 12a from below. The main body 12a includes a suction port 14 connected to a vacuum generator (not shown). The body 12 includes therein a negative pressure chamber 16 communicating with the suction port 14. The plate 12b includes a plurality of communication passages 18 communicating with the negative pressure chamber 16.

The sponge member 20 having a plate shape is attached to a lower surface of the plate 12b by means of bonding or the like. The sponge member 20 includes a plurality of cavities 22 opening toward a workpiece W. The cavities 22 of the sponge member 20 communicate with the negative pressure chamber 16 through the communication passages 18 of the plate 12b. The sponge member 20 comes into contact with the workpiece W at a lower surface (bottom surface) 24 thereof.

The sponge member 20 is made of a material having a semi-open and semi-closed cell structure, and is manufactured by foam-molding ethylene propylene rubber (EPDM), for example. The sponge member 20 exhibits flexibility which is a property of open cells until it is compressed by a predetermined amount from a natural state, and exhibits airtightness which is a property of closed cells after it is compressed by the predetermined amount.

The sponge member 20 can be deformed in accordance with the surface shape of the workpiece W by exhibiting flexibility. Even if the workpiece W has irregularities on its surface as in the case of a cardboard box in which beverage containers are packaged, no gap is generated between the sponge member 20 and the workpiece W. The sponge member 20 comes into close contact with the workpiece W and then exhibits airtightness to cause vacuum pressure required for sucking the workpiece W to act on the workpiece W.

The thickness of the sponge member 20 when no vertical compressive force is applied to the sponge member 20 is represented by T0, and the thickness of the sponge member 20 when a vertical compressive force is applied to the sponge member 20 is represented by T. Then, a compression amount (%) of the sponge member 20 is defined as (T0 - T)/T0 × 100. Although depending on the ratio of open cells and closed cells, the sponge member 20 exhibits sufficient airtightness when compressed to a compression amount of at least about 70 %, for example.

A flow passage adjustment valve 26 is arranged in the middle of each communication passage 18 of the body 12. The flow passage adjustment valve 26 adjusts the flow passage area of the communication passage 18 in accordance with the suction state of the workpiece W. When the cavity 22 is closed by the workpiece W, the flow passage area of the communication passage 18 is sufficiently increased, and the pressure in the cavity 22 becomes equal to the pressure in the negative pressure chamber 16. That is, when the cavity 22 is closed by the workpiece W, the same vacuum pressure as the vacuum pressure generated in the negative pressure chamber 16 is generated in the cavity 22. When the cavity 22 is not closed by the workpiece W, the flow passage area of the communication passage 18 is sufficiently decreased, and high vacuum pressure is generated in the negative pressure chamber 16, while the pressure in the cavity 22 becomes substantially equal to the atmospheric pressure.

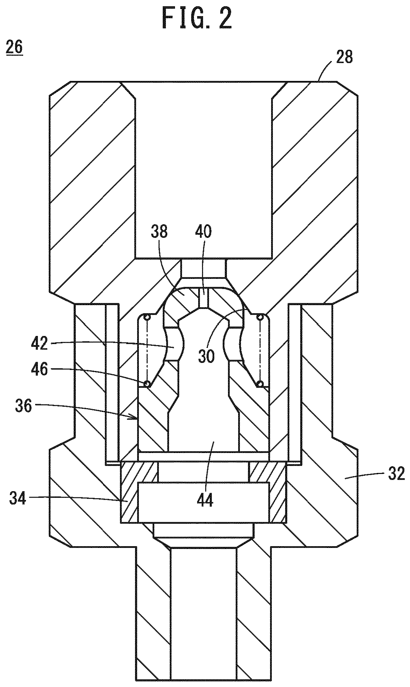

A specific structural example of the flow passage adjustment valve 26 is shown in FIG. 2. The flow passage adjustment valve 26 includes a first joint member 28, a second joint member 32, and a valve element 36. The tubular valve element 36 is disposed inside the tubular first joint member 28, and can be vertically displaced with respect to the first joint member 28. The first joint member 28 is provided with a tapered seat portion 30 against which a head part 38 of the valve element 36 can abut. The tubular second joint member 32 is connected and fixed to the first joint member 28. A stopper 34 capable of abutting against a lower end of the valve element 36 is attached to the second joint member 32. By the valve element 36 abutting against the stopper 34, downward displacement of the valve element 36 is regulated.

The head part 38 of the valve element 36 includes an orifice 40 at its center, and the orifice 40 communicates with an inner space 44 of the valve element 36. A sidewall of the valve element 36 includes a plurality of openings 42 that communicate with the inner space 44 of the valve element 36. The area of the opening 42 is sufficiently larger than the area of the orifice 40. The inner space 44 of the valve element 36 communicates, at the lower end thereof, with an internal space of the second joint member 32. A spring 46 for biasing the valve element 36 downward is disposed between the first joint member 28 and the valve element 36.

In a state where the head part 38 of the valve element 36 is separated from the seat portion 30 of the first joint member 28, an internal space of the first joint member 28 that is located above the seat portion 30 communicates with the inner space 44 of the valve element 36 via the orifice 40 and the plurality of openings 42 of the valve element 36. In a state where the head part 38 of the valve element 36 is in abutment against the seat portion 30 of the first joint member 28, the internal space of the first joint member 28 that is located above the seat portion 30 communicates with the inner space 44 of the valve element 36 only via the orifice 40 of the valve element 36.

When vacuum pressure is generated in the negative pressure chamber 16 in a state where the cavity 22 is not closed by the workpiece W, air passes through the orifice 40 of the valve element 36 from the lower side toward the upper side at a high flow velocity. Therefore, the valve element 36 is displaced upward by the pressure difference generated before and after the orifice 40, and the head part 38 of the valve element 36 abuts against the seat portion 30 of the first joint member 28. When the head part 38 of the valve element 36 abuts against the seat portion 30, the flow passage area of the communication passage 18 decreases, and the flow velocity of the air passing through the orifice 40 further increases. As a result, the state where the head part 38 of the valve element 36 is in abutment against the seat portion 30 of the first joint member 28 is reliably maintained.

When the cavity 22 is closed by the workpiece W, the flow rate of the air passing through the orifice 40 of the valve element 36 decreases, and the flow velocity of the air passing through the orifice 40 decreases. Therefore, the pressure difference generated before and after the orifice 40 becomes small, the valve element 36 is displaced downward by the biasing force of the spring 46, and the head part 38 of the valve element 36 moves away from the seat portion 30 of the first joint member 28. When the head part 38 of the valve element 36 moves away from the seat portion 30, the flow passage area of the communication passage 18 increases.

The suction pad 10 can suck workpieces W of various sizes. The pressure in the negative pressure chamber 16 of the body 12 does not increase even if the workpiece W is small enough to contact only a part of the bottom surface 24 of the sponge member 20 and one or some of the cavities 22 of the sponge member 20 are open to the atmosphere. That is, even if there is a cavity 22 which is not closed by the workpiece W, the vacuum pressure generated in the negative pressure chamber 16 does not decrease due to the action of the flow passage adjustment valve 26.

The body 12 includes a detection passage 48 for detecting the pressure in a predetermined cavity 22 of the sponge member 20. The detection passage 48 is arranged for each of one or more selected cavities 22. The detection passage 48 vertically passes through the negative pressure chamber 16 and extends from an upper surface to a lower surface of the body 12, and a lower end of the detection passage 48 communicates with the corresponding cavity 22. An upper end of each detection passage 48 forms a pressure detection port 50. A pressure sensor 52 is individually connected to each pressure detection port 50. The pressure in the selected cavity 22 is detected by the pressure sensor 52.

Among the plurality of cavities 22, the cavity 22 for which the detection passage 48 is correspondingly arranged is determined in consideration of the size of the workpiece W to be sucked. When the workpiece W of a predetermined size comes into contact with the sponge member 20, the detection passages 48 are arranged corresponding to one or more cavities 22 closed by the workpiece W, and one or more cavities 22 that are not closed by the workpiece W. In order to explain the principle of the present invention using a simple drawing, FIG. 1 shows three cavities 22a to 22c. The detection passages 48 and the pressure sensors 52 are arranged corresponding to the cavity 22a and the cavity 22c among the three cavities.

Next, the operation of the suction pad 10 according to the present embodiment for sucking the workpiece W will be described. The suction pad 10 is used by being attached to, for example, a conveying device (not shown).

When a command for sucking the workpiece W placed on a floor surface or the like and conveying the workpiece W to a predetermined place is issued from a host controller (not shown) such as a PLC, the conveying device is driven and the suction pad 10 comes into contact with the workpiece W. At the same time or prior thereto, air in the negative pressure chamber 16 is sucked from the suction port 14 toward the vacuum generator. Although all the cavities 22 of the sponge member 20 are open to the atmosphere, the flow passage areas of the communication passages 18 are reduced by the flow passage adjustment valves 26. Therefore, high vacuum pressure is easily generated in the negative pressure chamber 16.

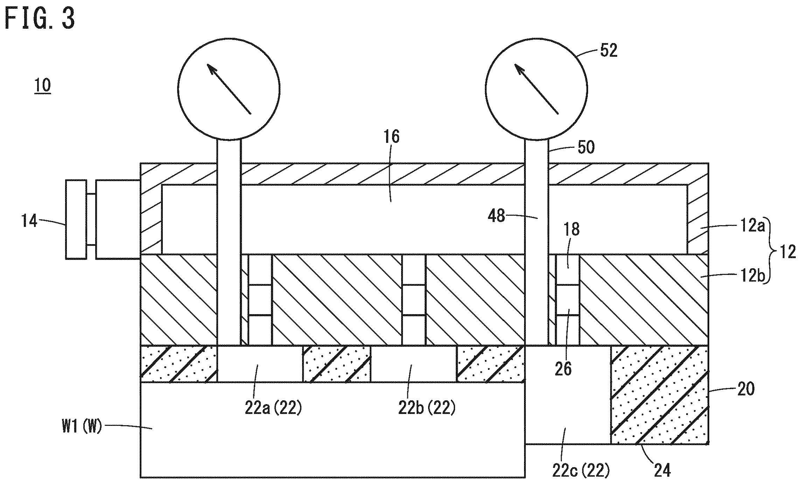

When a workpiece W1 having a small size comes into contact with a part of the bottom surface 24 of the sponge member 20, one or some of the cavities 22 of the sponge member 20 are closed by the workpiece W1. Referring to FIG. 3, the cavity 22a and the cavity 22b are closed by the workpiece W1, and the cavity 22c is not closed by the workpiece W1. The cavities 22a and 22b closed by the workpiece W1 communicate with the negative pressure chamber 16 through the communication passages 18 whose flow passage areas are sufficiently increased by the flow passage adjustment valves 26. Therefore, the vacuum pressure generated in the negative pressure chamber 16 is directly transmitted to the cavities 22a and 22b and acts on an upper surface portion of the workpiece W1 that is in contact with the cavities 22a and 22b. Since the cavity 22c, which is not closed by the workpiece W1, communicates with the negative pressure chamber 16 through the communication passage 18 whose flow passage area is reduced, the vacuum pressure generated in the negative pressure chamber 16 does not decrease.

Due to the vacuum pressure generated in the negative pressure chamber 16, an upward force (lifting force) acts on the workpiece W1. The lifting force is represented by ΔP·S, where ΔP represents a difference between the atmospheric pressure and the pressure in the negative pressure chamber 16, and S is the total cross-sectional area of the cavities 22 closed by the workpiece W1. On the other hand, a downward force acting on the workpiece W1 is represented by (W + F), where W represents a weight of the workpiece W1 and F is a repulsive force caused by the compression of the sponge member 20. The repulsive force F changes according to the compression amount of the sponge member 20. When the sponge member 20 is compressed by a predetermined amount, ΔP·S = W + F is established. That is, the upward force and the downward force acting on the workpiece W1 are balanced, and the workpiece W1 is stably held by the suction pad 10.

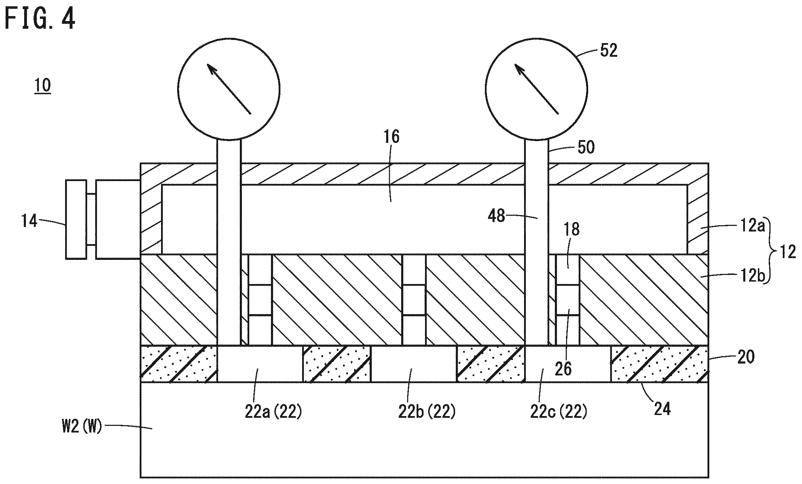

When a workpiece W2 having a large size comes into contact with the entire bottom surface 24 of the sponge member 20, all the cavities 22 of the sponge member 20 are closed by the workpiece W2. Referring to FIG. 4, the cavities 22a to 22c communicate with the negative pressure chamber 16 through the communication passages 18 whose flow passage areas are sufficiently increased by the flow passage adjustment valves 26, and the vacuum pressure acts on an upper surface portion of the workpiece W2 that is in contact with the cavities 22a to 22c. As in the case of the workpiece W1 having a small size, the upward force and the downward force acting on the workpiece W2 are balanced, whereby the workpiece W2 is stably held by the suction pad 10.

Next, a method of confirming the suction state of the workpiece W using the suction pad 10 according to the present embodiment will be described.

When the workpiece W1 having such a size that it contacts only a part of the bottom surface 24 of the sponge member 20 is being sucked, the vacuum pressure is detected by at least one of the pressure sensors 52 and the atmospheric pressure is detected by the remaining pressure sensors 52. Referring to FIG. 3, the pressure sensor 52 corresponding to the cavity 22a closed by the workpiece W1 indicates the vacuum pressure, and the pressure sensor 52 corresponding to the cavity 22c that is not closed by the workpiece W1 indicates the atmospheric pressure. On the other hand, when the workpiece W1 is not being sucked, the atmospheric pressure is detected by these pressure sensors 52. Therefore, by monitoring the pressures detected by the respective pressure sensors 52, it is possible to determine whether or not the workpiece W1 is being sucked.

When the workpiece W2 having such a size that it contacts the entire bottom surface 24 of the sponge member 20 is being sucked, the vacuum pressure is detected by all the pressure sensors 52. Referring to FIG. 4, both the pressure sensors 52 corresponding to the cavity 22a and the cavity 22c closed by the workpiece W2 indicate the vacuum pressure. On the other hand, when the workpiece W2 is not being sucked, the atmospheric pressure is detected by these pressure sensors 52. Therefore, by monitoring the pressures detected by the respective pressure sensors 52, it is possible to determine whether or not the workpiece W2 is being sucked.

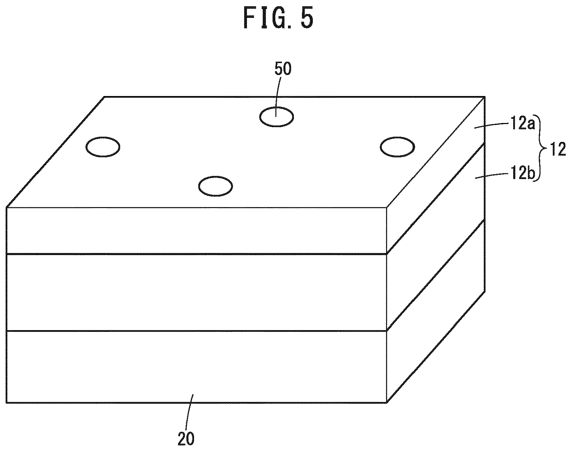

If the plurality of pressure detection ports 50 are arranged efficiently, the suction state of the workpiece W can be accurately confirmed. FIG. 5 shows an example in which four pressure detection ports 50 are arranged near the centers of four sides of the upper surface of the body 12. In particular, even if there is a variation in the position at which the workpiece W1 having a small size comes into contact with the bottom surface 24 of the sponge member 20, there is a high probability that at least one of the four cavities 22 corresponding to these four pressure detection ports 50 is closed by the workpiece W1. That is, even if the accuracy of the suction position of the workpiece W with respect to the sponge member 20 is low, it is possible to easily confirm whether or not the workpiece W is being sucked.

The suction pad 10 according to the present embodiment includes flow passage adjustment valves 26 that adjust the flow passage areas of the communication passages 18 in accordance with the suction state of the workpiece W. Therefore, the vacuum pressure generated in the negative pressure chamber 16 can be caused to act, without being decreased, on an upper surface of the workpiece W that is in contact with the cavity (cavities) 22. In addition, since the pressure detection ports 50 for detecting the pressure in one or more cavities 22 of the sponge member 20 are provided, it is possible to easily confirm whether or not the workpiece W is being sucked.

In the present embodiment, the detection passages 48 each vertically pass through the negative pressure chamber 16 and extend from the upper surface to the lower surface of the body 12, but the configuration of each detection passage is not limited thereto as long as the detection passage communicates with the cavity 22. For example, the detection passage may be branched from the communication passage 18 at a position lower than the flow passage adjustment valve 26 and opened to a side surface of the body 12 without passing through the negative pressure chamber 16.

Further, in the present embodiment, the flow passage adjustment valves 26 are disposed in all of the communication passages 18, but the flow passage adjustment valve 26 may not be disposed in some of the communication passages 18. For example, the flow passage adjustment valve 26 may not be disposed in the communication passage 18 corresponding to the cavity 22 having a high probability of being closed by the workpiece W regardless of the size of the workpiece W. In this case, the detection passage 48 including the pressure detection port 50 may be disposed corresponding to only one cavity 22 for which the flow passage adjustment valve 26 is not disposed.

### (Second Embodiment)

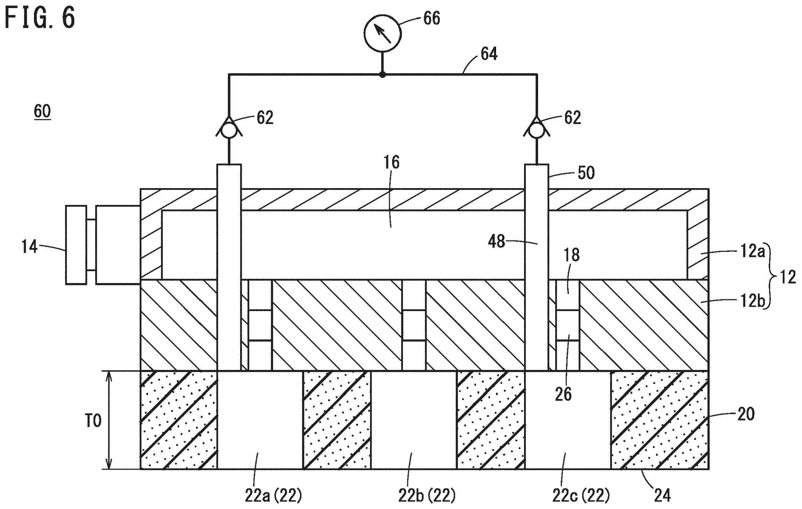

A suction pad 60 according to a second embodiment of the present invention will be described with reference to FIG. 6. Constituent elements that are the same as or equivalent to those of the suction pad 10 according to the first embodiment are denoted by the same reference numerals, and detailed description thereof is omitted.

The detection passage 48 of the body 12 is arranged for each of a plurality of selected cavities 22. The upper end of each detection passage 48 forms the pressure detection port 50. The respective pressure detection ports 50 are connected to a common flow path 64 via check valves 62, and a single pressure sensor 66 is connected to the common flow path 64. That is, the common pressure sensor 66 is connected to the plurality of pressure detection ports 50 via the check valves 62.

When at least one cavity 22 among the plurality of selected cavities 22 is closed by the workpiece W, vacuum pressure is generated in this cavity 22, and the vacuum pressure is detected by the pressure sensor 66. On the other hand, when the plurality of selected cavities 22 are not closed by the workpiece W, the pressure detected by the pressure sensor 66 remains the atmospheric pressure. Therefore, by monitoring the pressure detected by the pressure sensor 66, it is possible to determine whether or not the workpiece W is being sucked.

## Claims

1. A suction pad (10, 60) comprising: a body (12); and a sponge member (20),
wherein the body (12) includes a negative pressure chamber (16), and a plurality of communication passages (18) configured to communicate with the negative pressure chamber (16), and the sponge member (20) includes a plurality of cavities (22) configured to open toward a workpiece and communicate with the negative pressure chamber (16) through the communication passages (18),
a flow passage adjustment valve (26) configured to adjust a flow passage area is disposed in each of the communication passages (18), and when vacuum pressure is generated in the negative pressure chamber (16) and a cavity among the plurality of cavities (22) is not closed by the workpiece, a flow passage area of a communication passage among the communication passages (18) that corresponds to the cavity that is not closed by the workpiece is adjusted to be decreased, and
the suction pad (10, 60) further comprises a pressure detection port (50) configured to detect pressure in at least one cavity among the plurality of cavities (22),
the pressure detection port (50) is provided in plurality,
**characterized in that**
the body (12) includes a plurality of detection passages (48) configured to communicate with corresponding cavities (22) of the sponge member (20),
each of the detection passages (48) vertically passes through the body (12), and an end of each of the detection passages (48) forms each of the pressure detection ports (50), and
each of the pressure detection ports (50) is disposed near a center of each of four sides of an upper surface of the body (12).

2. The suction pad (10) according to claim 1, wherein a pressure sensor (52) is individually connected to each of the plurality of pressure detection ports (50).

3. The suction pad (60) according to claim 1, wherein a common pressure sensor (66) is connected to the plurality of pressure detection ports (50) via check valves (62).

## Patentansprüche

1. Saugnapf (10, 60) mit: einem Körper (12) und einem Schwammelement (20),
wobei der Körper (12) eine Unterdruckkammer (16) und mehrere Verbindungsdurchgänge (18) umfasst, die so konfiguriert sind, dass sie mit der Unterdruckkammer (16) in Verbindung stehen, und das Schwammelement (20) mehrere Hohlräume (22) umfasst, die so konfiguriert sind, dass sie sich zu einem Werkstück hin öffnen und über die Verbindungsdurchgänge (18) mit der Unterdruckkammer (16) in Verbindung stehen,
wobei ein Durchflussweg-Einstellventil (26), das so konfiguriert ist, dass es einen Durchflusswegbereich einstellt, in jedem der Verbindungskanäle (18) angeordnet ist, und wenn in der Unterdruckkammer (16) ein Unterdruck erzeugt wird und einer der mehreren Hohlräume (22) nicht durch das Werkstück verschlossen ist, ein Strömungskanalbereich eines Verbindungskanals unter den Verbindungskanälen (18), der dem Hohlraum entspricht, der nicht durch das Werkstück verschlossen ist, so eingestellt wird, dass er verringert wird, und
der Saugnapf (10, 60) ferner eine Druckerfassungsöffnung (50) umfasst, die so konfiguriert ist, dass sie den Druck in mindestens einem Hohlraum unter den mehreren Hohlräumen (22) erfasst,
wobei die Druckerfassungsöffnung (50) mehrfach vorgesehen ist,
**dadurch gekennzeichnet, dass**
der Körper (12) mehrere Erfassungskanäle (48) umfasst, die so konfiguriert sind, dass sie mit entsprechenden Hohlräumen (22) des Schwammelements (20) in Verbindung stehen,
jeder der Detektionskanäle (48) vertikal durch den Körper (12) verläuft und ein Ende jedes der Detektionskanäle (48) jede der Druckerfassungsöffnungen (50) bildet, und
jede der Druckerfassungsöffnungen (50) in der Nähe einer Mitte jeder der vier Seiten einer Oberseite des Körpers (12) angeordnet ist.

2. Saugnapf (10) nach Anspruch 1, wobei ein Drucksensor (52) einzeln mit jeder der mehreren Druckerfassungsöffnungen (50) verbunden ist.

3. Saugnapf (60) nach Anspruch 1, wobei ein gemeinsamer Drucksensor (66) über Rückschlagventile (62) mit den mehreren Druckerfassungsöffnungen (50) verbunden ist.

## Revendications

1. Tampon d'aspiration (10, 60) comprenant : un corps (12) ; et un élément en éponge (20),
dans lequel le corps (12) inclut une pluralité de chambres de pression négative (16) et une pluralité de passages de communication (18) configurés pour communiquer avec la chambre de pression négative (16), et l'élément en éponge (20) inclut une pluralité de cavités (22) configurées pour s'ouvrir vers une pièce usinée et pour communiquer avec la chambre de pression négative (16) à travers les passages de communication (18),
une soupape de réglage de passage d'écoulement (26) configurée pour régler une aire de passage d'écoulement est disposée dans chacun des passages de communication (18), et lorsqu'une pression de vide est générée dans la chambre de pression négative (16) et qu'une cavité parmi la pluralité de cavités (22) n'est pas fermée par la pièce usinée, une aire de passage d'écoulement d'un passage de communication parmi les passages de communication (18) correspondant à la cavité non fermée par la pièce usinée est réglée de manière à être réduite, et
le tampon d'aspiration (10, 60) comprend en outre un orifice de détection de pression (50) configuré pour détecter la pression dans au moins une cavité parmi la pluralité de cavités (22),
l'orifice de détection de pression (50) est fourni en pluralité,
**caractérisé en ce que**
le corps (12) inclut une pluralité de passages de détection (48) configurés pour communiquer avec des cavités (22) correspondantes de l'élément en éponge (20),
chacun des passages de détection (48) traverse verticalement le corps (12), et une extrémité de chacun des passages de détection (48) forme chacun des orifices de détection de pression (50), et
chacun des orifices de détection de pression (50) est disposé à proximité d'un centre de chacun parmi quatre côtés d'une surface supérieure du corps (12).

2. Tampon d'aspiration (10) selon la revendication 1, dans lequel une capteur de pression (52) est relié individuellement à chacun parmi la pluralité d'orifices de détection de pression (50).

3. Tampon d'aspiration (60) selon la revendication 1, dans lequel un capteur de pression commun (66) est relié à la pluralité d'orifices de détection de pression (50) par le biais de clapets antiretour (62).
